# EUROPEAN PATENT SPECIFICATION

(11) **EP 2 628 383 B1**
(45) Date of publication and mention of the grant of the patent: **23.04.2014**
(21) Application number: 12401023.2
(22) Date of filing: 16.02.2012
(51) Int. Cl.: A01G 3/025, A01G 3/047, B26B 13/26

(54) **Gardening shears having handles with changeable pivotal angles**
Gartenschere mit Griffen mit änderbaren Drehwinkeln
Sécateurs de jardinage dotés de poignées avec des angles pivotants modifiables

(43) Date of publication of application: 21.08.2013
(73) Proprietor: Jiin Haur Industrial Co., Ltd., TW. Lu Kang Town, Changhua Hsien (TW)
(72) Inventor: Wu, Shih-Piao, TW. Lu Kang Town, Changhua Hsien (TW)
(74) Representative: Patentanwälte Hosenthien-Held und Dr. Held

(56) References cited:
- DE-U1- 20 005 825
- US-A1- 2003 014 868
- US-A1- 2005 246 900
- US-A1- 2006 230 886

## Description

The present invention relates to a gardening cutting tool and, more particularly, to a pair of gardening shears for shearing a plant.

A gardening cutting tool, such as a pair of gardening shears, is used to cut or shear a plant, such as the branches of a tree. A pair of conventional gardening shears comprise two cutters pivotally connected with each other by a screw and a nut, and two handles each connected with a respective one of the cutters. Thus, the cutters are driven by the handles to perform a shearing or cutting action. However, the two handles are fixedly connected with the cutters, and the angle between each of the handles and each of the cutters is fixed and cannot be changed so that when a user hold the handles to operate the cutters, each of the cutters cannot be adjusted to have the optimum angle to fit the position of the object to be sheared and cannot shear the object easily, thereby decreasing the working efficiency of the gardening shears. In addition, each of the handles is in line with each of the cutters so that when the cutters are used to shear the grass on the ground, the user's hands are close to the ground and are easily rubbed and scratched by the ground. Further, the two handles are fixedly connected with the cutters, so that the gardening shears cannot be folded when not in use, thereby causing inconvenience in storage and transportation of the gardening shears.

US 2003/0014868 describes a pair of gardening shears, comprising two opposite cutters, two handles connected with the cutters respectively, and two pivot units each pivotally connected with a respective one of the cutters and a respective one of the handles. Thus, each of the handles is pivotable relative to a respective one of the cutters by a respective one of the pivot units to change an angle between each of the handles and the respective cutter.

The present invention aims to ameliorate such a known gardening tool. In accordance with the present invention, there is provided a pair of gardening shears as characterized in claim 1. Further embodiments are described in the dependent claims.

According to the primary advantage of the present invention, each of the handles is pivoted relative to the respective cutter to change the angle between each of the handles and the respective cutter and to change the pitch angle of each of the handles freely.

According to another advantage of the present invention, the angle between each of the handles and each of the cutters can be changed so that each of the cutters can be adjusted to have the optimum angle so as to fit the position of an object to be sheared, thereby enhancing the working efficiency of the gardening shears.

According to a further advantage of the present invention, the handles are pivoted upward relative to the cutters so that when the cutters are used to shear the grass on the ground, the user's hands can directly hold the handles to operate the cutters without having to be close to the ground, thereby preventing the user's hands from being rubbed by the ground.

According to a further advantage of the present invention, the handles and the cutters are moved toward and juxtaposed to each other to fold the gardening shears so as to shorten the whole length and volume of the gardening shears and to facilitate storage, carrying, transportation and packaging of the gardening shears.

According to a further advantage of the present invention, each of the handles is pivoted relative to the respective cutter independently so that the handles are pivoted individually to have different pivotal angles relative to the cutters to facilitate the user operating the gardening shears.

Further benefits and advantages of the present invention will become apparent after a careful reading of the detailed description with appropriate reference to the accompanying drawings.

In the drawings:
FIG. 1 is a perspective view of a pair of gardening shears in accordance with the preferred embodiment of the present invention.
FIG. 2 is an exploded perspective view of the gardening shears as shown in FIG. 1.
FIG. 3 is a partially front view of the gardening shears as shown in FIG. 1.
FIG. 4 is a partially top cross-sectional view of the gardening shears as shown in FIG. 1.
FIG. 4a is a locally enlarged view of the gardening shears as shown in FIG. 4.
FIG. 5 is a schematic operational view of the gardening shears as shown in FIG. 4.
FIG 5a is a locally enlarged view of the gardening shears as shown in FIG. 5.
FIG. 6 is a schematic operational view of the gardening shears as shown in FIG. 3.
FIG. 7 is a schematic operational view of the gardening shears as shown in FIG. 1.
FIG. 8 is a schematic operational view of the gardening shears as shown in FIG. 1.
FIG. 9 is a schematic operational view of the gardening shears as shown in FIG. 1.
FIG. 10 is a top view of a pair of gardening shears in accordance with the preferred embodiment of the present invention.

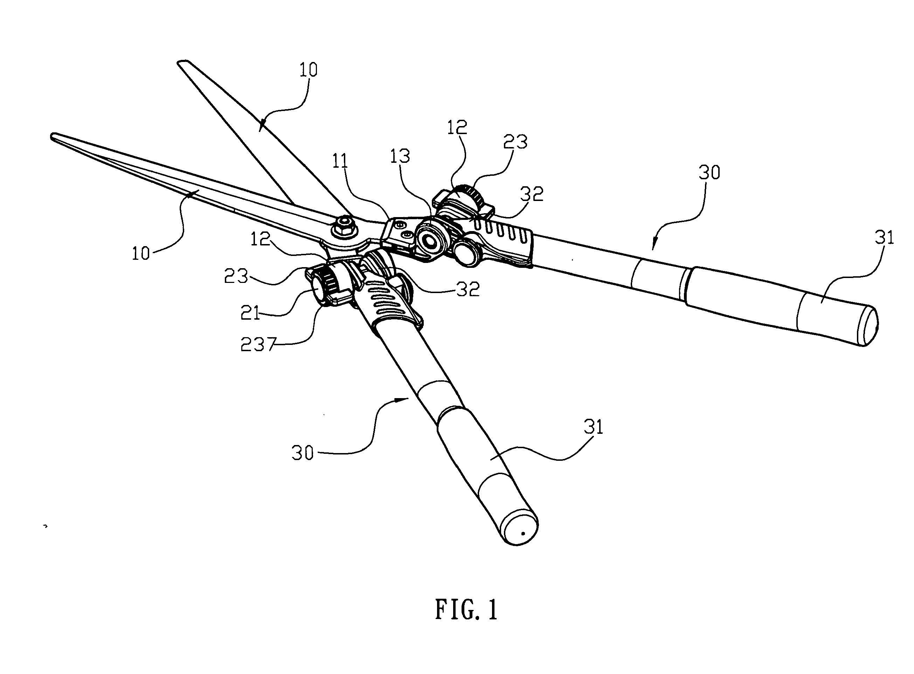

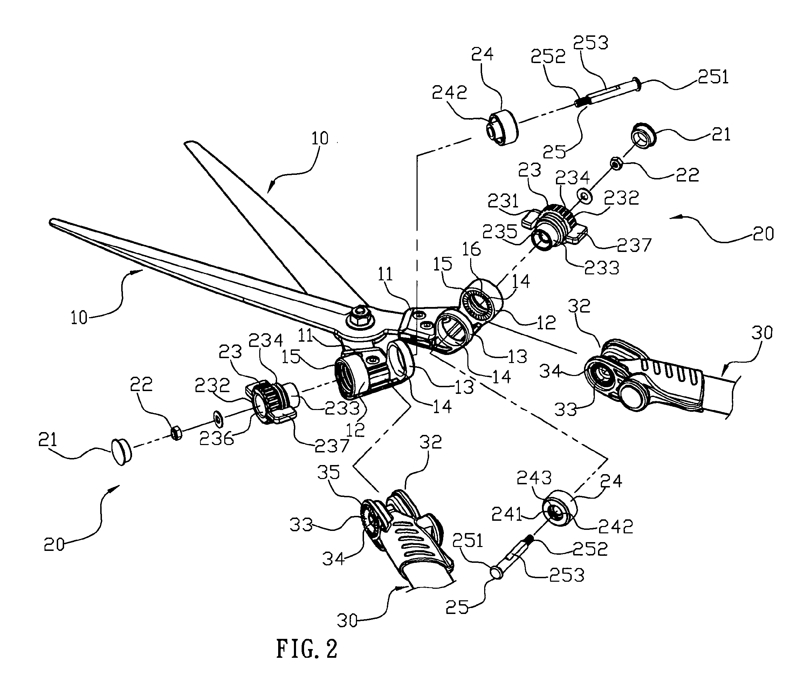

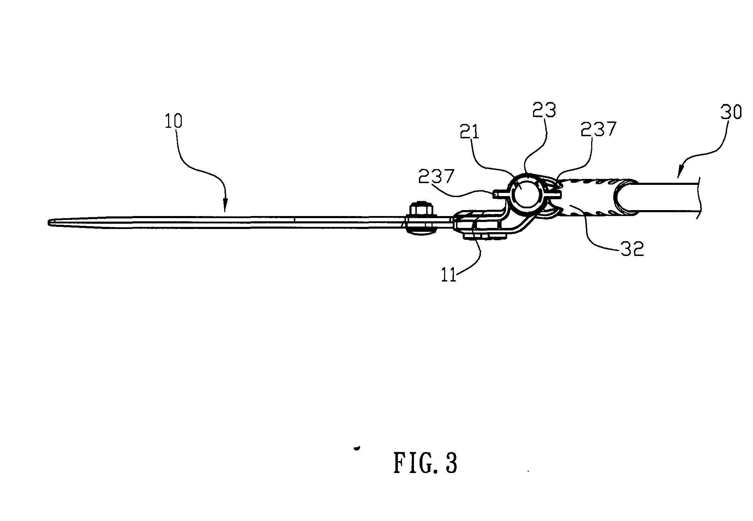

Referring to the drawings and initially to FIGS. 1-3, a pair of gardening shears in accordance with the preferred embodiment of the present invention comprise two opposite cutters 10, two handles 30 connected with the cutters 10 respectively, and two pivot units 20 each pivotally connected with a respective one of the cutters 10 and a respective one of the handles 30. Thus, each of the handles 30 is pivotable relative to a respective one of the cutters 10 by a respective one of the pivot units 20 to change an angle between each of the handles 30 and the respective cutter 10.

The cutters 10 are pivotally connected with each other and are driven by the handles 30 to perform a shearing or cutting action. Each of the cutters 10 has a rear portion provided with a first pivot seat 12 and a second pivot seat 13 spaced from the first pivot seat 12. Each of the first pivot seat 12 and the second pivot seat 13 of each of the cutters 10 has an interior provided with a through hole 14. The first pivot seat 12 of each of the cutters 10 has an inner wall provided with an internal thread 15 connected to the through hole 14. The first pivot seat 12 of each of the cutters 10 has a side provided with a first toothed portion 16. The first toothed portion 16 of each of the cutters 10 has an annular shape and faces the second pivot seat 13. The rear portion of each of the cutters 10 is combined with a mounting base 11, and the first pivot seat 12 and the second pivot seat 13 of each of the cutters 10 are mounted on the mounting base 11.

Each of the handles 30 is an elongate bar and has a first end provided with a pivot head 32 pivotally mounted in a space between the first pivot seat 12 and the second pivot seat 13 of the respective cutter 10. The pivot head 32 of each of the handles 30 has a side provided with a second toothed portion 35 that is movable to engage the first toothed portion 16 of the first pivot seat 12 of the respective cutter 10. The second toothed portion 35 of the pivot head 32 of each of the handles 30 has an annular shape and faces the first pivot seat 12 of the respective cutter 10. The pivot head 32 of each of the handles 30 has an interior provided with a locking hole 34 and has two opposite faces each provided with a mounting hole 33 connected to the locking hole 34. The mounting hole 33 of the pivot head 32 of each of the handles 30 has a size greater than that of the locking hole 34. Preferably, the locking hole 34 of the pivot head 32 of each of the handles 30 has a non-circular shape. Each of the handles 30 has a second end provided with a grip portion 31.

Each of the pivot units 20 includes a rotation knob 23 rotatably mounted on the first pivot seat 12 of the respective cutter 10, a contact member 24 mounted in the through hole 14 of the second pivot seat 13 of the respective cutter 10 and abutting the pivot head 32 of the respective handle 30, a connecting rod 25 in turn extended through the contact member 24, the pivot head 32 of the respective handle 30, the first pivot seat 12 of the respective cutter 10 and the rotation knob 23, and a fastening member 22 locked onto the connecting rod 25 and abutting the rotation knob 23.

The rotation knob 23 of each of the pivot units 20 has a periphery provided with two opposite drive wings 237. The rotation knob 23 of each of the pivot units 20 has a first end 231 provided with a mounting sleeve 233 which has an outer wall provided with an external thread 234 screwed into the internal thread 15 of the first pivot seat 12 of the respective cutter 10 so that when the rotation knob 23 of each of the pivot units 20 is rotated relative to the first pivot seat 12 of the respective cutter 10, the rotation knob 23 of each of the pivot units 20 is moved axially relative to the first pivot seat 12 of the respective cutter 10. The mounting sleeve 233 of the rotation knob 23 of each of the pivot units 20 is extended through the through hole 14 of the second pivot seat 13 of the respective cutter 10 and is extended into the mounting hole 33 of the pivot head 32 of the respective handle 30. The rotation knob 23 of each of the pivot units 20 has a second end 232 provided with a counterbore 236. The rotation knob 23 of each of the pivot units 20 has an interior provided with a passage 235 connected to the counterbore 236 to allow passage of the connecting rod 25. The passage 235 of the rotation knob 23 of each of the pivot units 20 extends through the first end 231 and the second end 232 of the rotation knob 23 and has a size smaller than that of the counterbore 236. The rotation knob 23 of each of the pivot units 20 has a surface provided with a direction marking to indicate locked and unlocked directions of the rotation knob 23 of each of the pivot units 20. Preferably, the direction marking is formed on the first end 231 or the second end 232 of the rotation knob 23.

The contact member 24 of each of the pivot units 20 is a cap and has an interior provided with a tube 242 mounted on the connecting rod 25. The tube 242 of the contact member 24 of each of the pivot units 20 is extended into the mounting hole 33 of the pivot head 32 of the respective handle 30 and abuts the pivot head 32 of the respective handle 30. The tube 242 of the contact member 24 of each of the pivot units 20 has an interior provided with an aperture 241 to allow passage of the connecting rod 25. The tube 242 of the contact member 24 of each of the pivot units 20 has an end face provided with a stepped abutting edge 243 connected to the aperture 241.

The connecting rod 25 of each of the pivot units 20 is in turn extended through the aperture 241 of the tube 242 of the contact member 24, the locking hole 34 of the pivot head 32 of the respective handle 30, the through hole 14 of the first pivot seat 12 of the respective cutter 10 and the passage 235 of the rotation knob 23 into the counterbore 236 of the rotation knob 23. The connecting rod 25 of each of the pivot units 20 has a first end provided with an enlarged stop portion 251 abutting the abutting edge 243 of the contact member 24 and a second end provided with a threaded post 252 protruded outward from the passage 235 of the rotation knob 23 and extended into the counterbore 236 of the rotation knob 23. The stop portion 251 of the connecting rod 25 of each of the pivot units 20 is received in the contact member 24. The connecting rod 25 of each of the pivot units 20 has a mediate portion provided with a locking portion 253 locked in the locking hole 34 of the pivot head 32 of the respective handle 30 to lock the connecting rod 25 of each of the pivot units 20 with the pivot head 32 of the respective handle 30. The locking portion 253 of the connecting rod 25 of each of the pivot units 20 is disposed between the stop portion 251 and the threaded post 252. Preferably, the locking portion 253 of the connecting rod 25 of each of the pivot units 20 has a non-circular shape.

The fastening member 22 of each of the pivot units 20 is a nut which is screwed onto the threaded post 252 of the connecting rod 25. The fastening member 22 of each of the pivot units 20 is received in the counterbore 236 of the rotation knob 23 and abuts a bottom wall of the counterbore 236.

Each of the pivot units 20 further includes a sealing cap 21 mounted on the rotation knob 23 and partially extended into the counterbore 236 of the rotation knob 23 to seal the counterbore 236 of the rotation knob 23 and to cover the fastening member 22 and the threaded post 252 of the connecting rod 25.

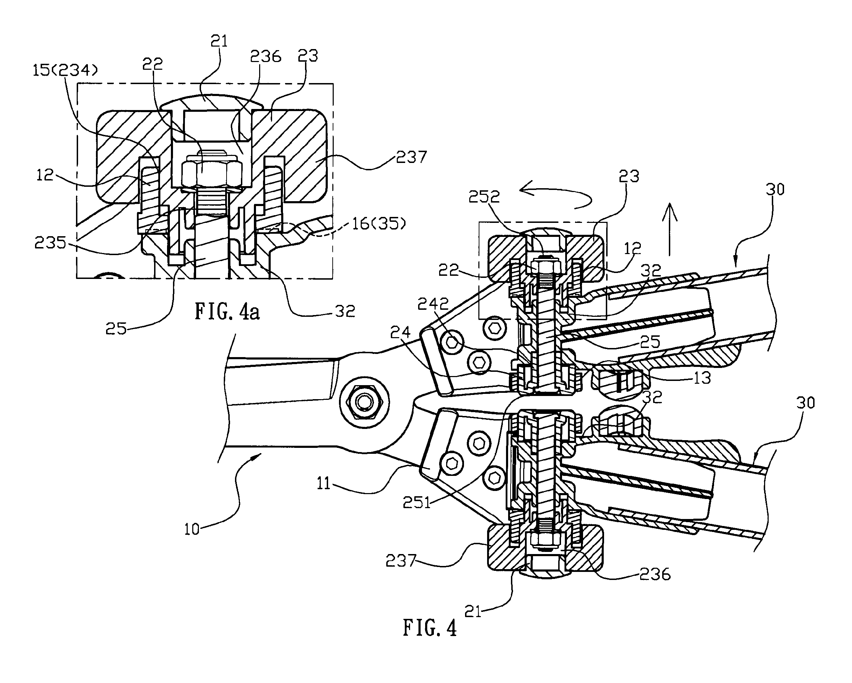

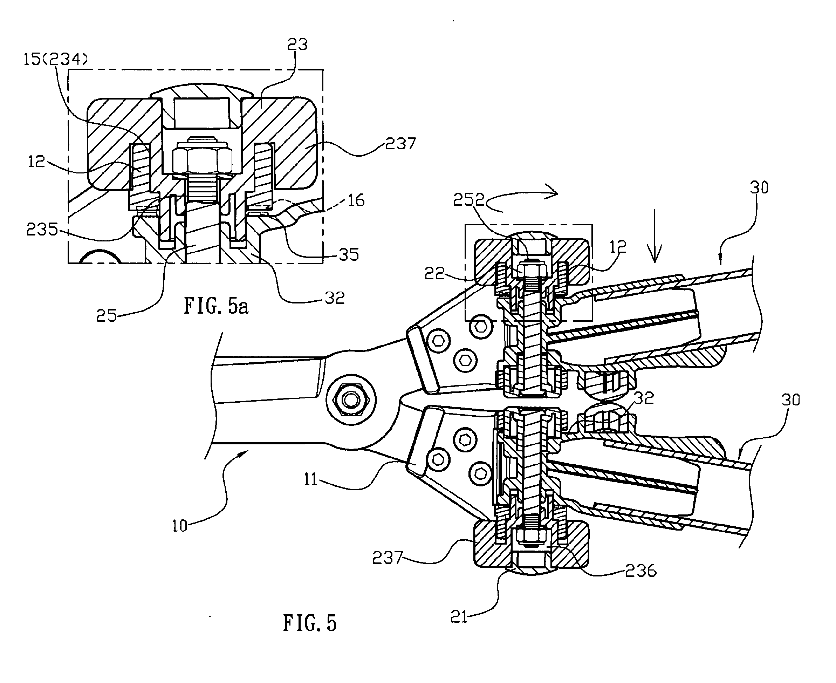

In operation, referring to FIGS. 4 and 5 with reference to FIGS. 1-3, when the drive wings 237 of the rotation knob 23 of each of the pivot units 20 are driven, the rotation knob 23 of each of the pivot units 20 is rotated relative to the first pivot seat 12 of the respective cutter 10, so that the rotation knob 23 of each of the pivot units 20 is moved axially relative to the first pivot seat 12 of the respective cutter 10 by a screwing engagement between the external thread 234 of the rotation knob 23 of each of the pivot units 20 and the internal thread 15 of the first pivot seat 12 of the respective cutter 10.

In such a manner, when the rotation knob 23 of each of the pivot units 20 is rotated relative to the first pivot seat 12 of the respective cutter 10 in a first direction as indicated by the arrow shown in FIG. 4, the rotation knob 23 of each of the pivot units 20 is moved outward relative to the first pivot seat 12 of the respective cutter 10 to drive the fastening member 22 which drives the connecting rod 25 which drives the stop portion 251 which drives the contact member 24 which pushes the pivot head 32 of the respective handle 30 toward the first pivot seat 12 of the respective cutter 10 as indicated by the arrow shown in FIG. 4 so that the second toothed portion 35 of the pivot head 32 of the respective handle 30 is moved to engage the first toothed portion 16 of the first pivot seat 12 of the respective cutter 10 as shown in FIG. 4a. Thus, when each of the pivot units 20 is disposed at a locked state, each of the handles 30 is locked onto the respective cutter 10 so that each of the handles 30 cannot be pivoted relative to the respective cutter 10.

On the contrary, when the rotation knob 23 of each of the pivot units 20 is rotated relative to the first pivot seat 12 of the respective cutter 10 in a second direction as indicated by the arrow shown in FIG. 5, the rotation knob 23 of each of the pivot units 20 is moved toward the first pivot seat 12 of the respective cutter 10 to drive the fastening member 22 which drives the connecting rod 25 which drives the stop portion 251 which drives the contact member 24 which pulls the pivot head 32 of the respective handle 30 outward from the first pivot seat 12 of the respective cutter 10 as indicated by the arrow shown in FIG. 5 so that the second toothed portion 35 of the pivot head 32 of the respective handle 30 is moved to disengage and space from the first toothed portion 16 of the first pivot seat 12 of the respective cutter 10 as shown in FIG. 5a. Thus, when each of the pivot units 20 is disposed at an unlocked state, each of the handles 30 is unlocked from the respective cutter 10 so that each of the handles 30 can be pivoted relative to the respective cutter 10 in a stepless manner.

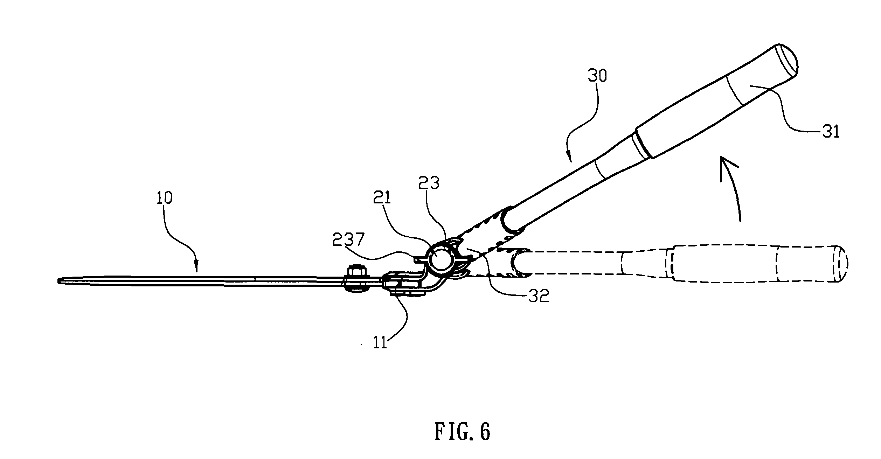

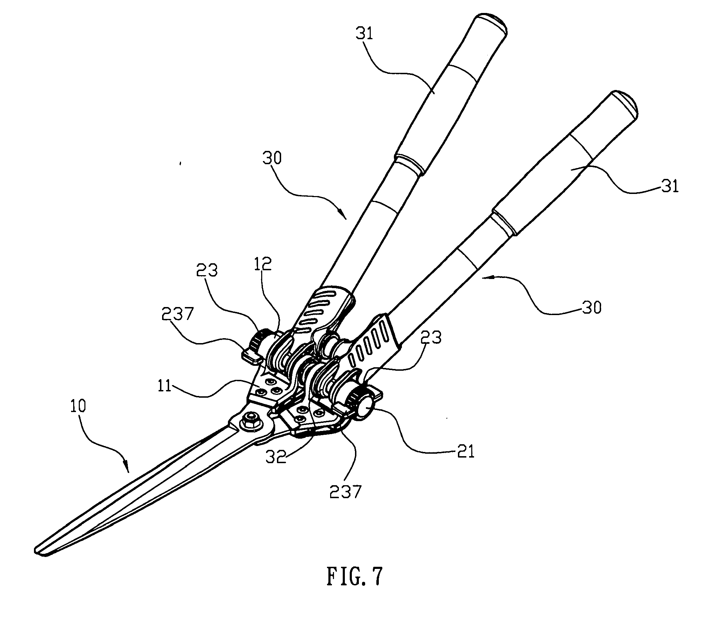

As shown in FIGS. 6 and 7, each of the handles 30 is pivoted relative to the respective cutter 10 to change the angle between each of the handles 30 and the respective cutter 10 and to change the pitch angle of each of the handles 30.

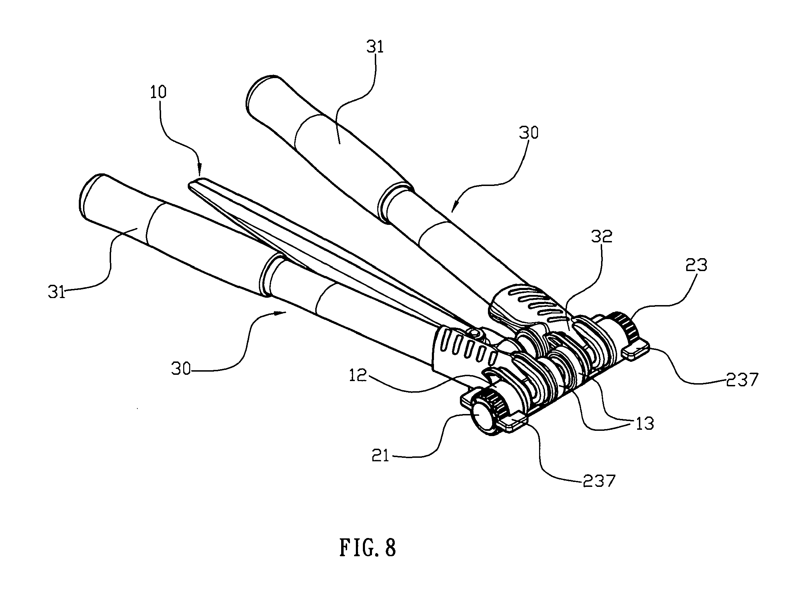

As shown in FIG. 8, each of the handles 30 is pivoted relative to the respective cutter 10 through one hundred and eighty degrees (180°) so that the handles 30 and the cutters 10 are closer to each other to fold the gardening shears so as to shorten the whole length of the gardening shears and to facilitate storage, carrying, transportation and packaging of the gardening shears.

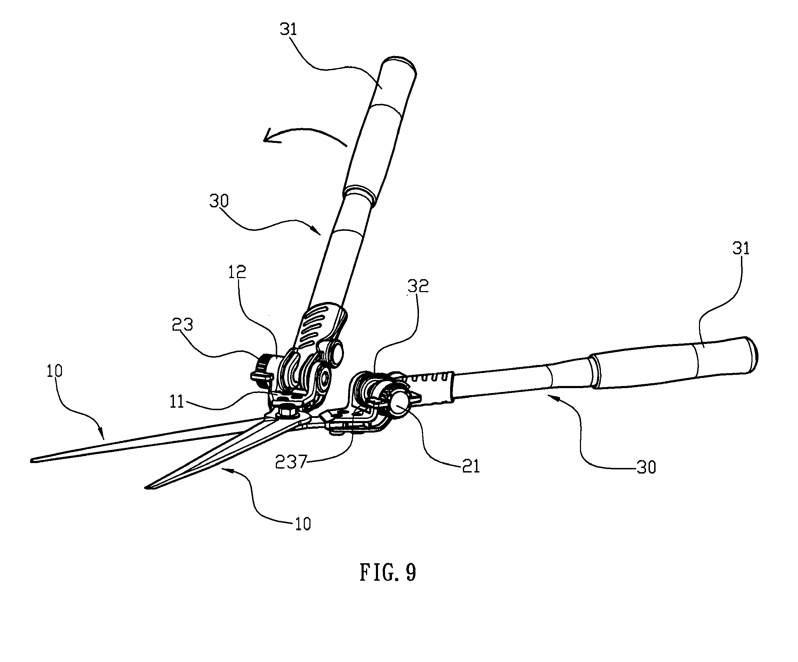

As shown in FIG. 9, each of the handles 30 is pivoted relative to the respective cutter 10 independently so that the handles 30 have different pivotal angles relative to the cutters 10 to facilitate a user operating the gardening shears.

As shown in FIGS. 1-9, each of the cutters 10 is a blade.

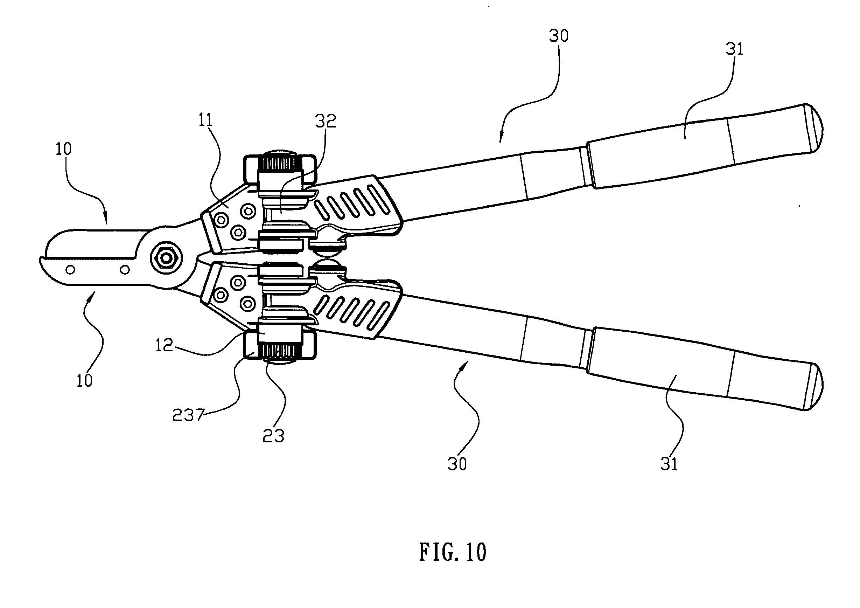

As shown in FIG. 10, one of the cutters 10 is a blade, and the other one of the cutters 10 is an anvil.

Accordingly, each of the handles 30 is pivoted relative to the respective cutter 10 to change the angle between each of the handles 30 and the respective cutter 10 and to change the pitch angle of each of the handles 30 freely. In addition, the angle between each of the handles 30 and each of the cutters 10 can be changed so that each of the cutters 10 can be adjusted to have the optimum angle so as to fit the position of an object to be sheared, thereby enhancing the working efficiency of the gardening shears. Further, the handles 30 are pivoted upward relative to the cutters 10 as shown in FIG. 7 so that when the cutters 10 are used to shear the grass on the ground, the user's hands can directly hold the handles 30 to operate the cutters 10 without having to be close to the ground, thereby preventing the user's hands from being rubbed by the ground. Further, the handles 30 and the cutters 10 are moved toward and juxtaposed to each other to fold the gardening shears so as to shorten the whole length and volume of the gardening shears and to facilitate storage, carrying, transportation and packaging of the gardening shears. Further, each of the handles 30 is pivoted relative to the respective cutter 10 independently so that the handles 30 are pivoted individually to have different pivotal angles relative to the cutters 10 to facilitate the user operating the gardening shears.

Although the invention has been explained in relation to its preferred embodiment(s) as mentioned above, it is to be understood that many other possible modifications and variations can be made without departing from the scope of the present invention. It is, therefore, contemplated that the appended claim or claims will cover such modifications and variations that fall within the true scope of the invention.

## Claims

1. A pair of gardening shears, comprising:
two opposite cutters (10);
two handles (30) connected with the cutters respectively; and
two pivot units (20) each pivotally connected with a respective one of the cutters and a respective one of the handles;
wherein each of the handles is pivotable relative to a respective one of the cutters by a respective one of the pivot units to change an angle between each of the handles and the respective cutters ;
**characterized in that** it further comprising:
the cutters are pivotally connected with each other;
each of the cutters has a rear portion provided with a first pivot seat (12) and a second pivot seat (13) spaced from the first pivot seat;
each of the first pivot seat and the second pivot seat of each of the cutters has an interior provided with a through hole (14);
the first pivot seat of each of the cutters has an inner wall provided with an internal thread (15) connected to the through hole;
the first pivot seat of each of the cutters has a side provided with a first toothed portion (16);
each of the handles has a first end provided with a pivot head (32) pivotally mounted in a space between the first pivot seat and the second pivot seat of the respective cutter;
the pivot head of each of the handles has a side provided with a second toothed portion (35) that is movable to engage the first toothed portion of the first pivot seat of the respective cutter;
the pivot head of each of the handles has an interior provided with a locking hole (34) and has two opposite faces each provided with a mounting hole (33) connected to the locking hole;
each of the pivot units includes:
a rotation knob (23) rotatably mounted on the first pivot seat of the respective cutter;
a contact member (24) mounted in the through hole of the second pivot seat of the respective cutter and abutting the pivot head of the respective handle;
a connecting rod (25) in turn extended through the contact member, the pivot head of the respective handle, the first pivot seat of the respective cutter and the rotation knob; and
a fastening member (22) locked onto the connecting rod and abutting the rotation knob;
the rotation knob of each of the pivot units has a periphery provided with two opposite drive wings (237);
the rotation knob of each of the pivot units has a first end (231) provided with a mounting sleeve (233) which has an outer wall provided with an external thread (234) screwed into the internal thread of the first pivot seat of the respective cutter;
the rotation knob of each of the pivot units has a second end (232) provided with a counterbore (236);
the rotation knob of each of the pivot units has an interior provided with a passage (235) connected to the counterbore to allow passage of the connecting rod;
the contact member of each of the pivot units has an interior provided with a tube (242) mounted on the connecting rod;
the tube of the contact member of each of the pivot units has an interior provided with an aperture (241) to allow passage of the connecting rod;
the tube of the contact member of each of the pivot units has an end face provided with a stepped abutting edge (243) connected to the aperture;
the connecting rod of each of the pivot units is in turn extended through the aperture of the tube of the contact member, the locking hole of the pivot head of the respective handle, the through hole of the first pivot seat of the respective cutter and the passage of the rotation knob into the counterbore of the rotation knob;
the connecting rod of each of the pivot units has a first end provided with an enlarged stop portion (251) abutting the abutting edge of the contact member and a second end provided with a threaded post (252) protruded outward from the passage of the rotation knob and extended into the counterbore of the rotation knob;
the connecting rod of each of the pivot units has a mediate portion provided with a locking portion (253) locked in the locking hole of the pivot head of the respective handle;
the fastening member of each of the pivot units is screwed onto the threaded post of the connecting rod.

2. The gardening shears of claim 1, wherein
the rear portion of each of the cutters is combined with a mounting base (11); and
the first pivot seat and the second pivot seat of each of the cutters are mounted on the mounting base.

3. The gardening shears of claim 1, wherein each of the pivot units further includes a sealing cap (21) mounted on the rotation knob and partially extended into the counterbore of the rotation knob to seal the counterbore of the rotation knob and to cover the fastening member and the threaded post of the connecting rod.

4. The gardening shears of claim 1, wherein
the rotation knob of each of the pivot units has a surface provided with a direction marking to indicate locked and unlocked directions of the rotation knob of each of the pivot units; and
the direction marking is formed on the first end or the second end of
the rotation knob.

5. The gardening shears of claim 1, wherein
the locking hole (34) of the pivot head (32) of each of the handles has a non-circular shape; and
the locking portion of the connecting rod (25) of each of the pivot units has a non-circular shape.

6. The gardening shears of claim 1, wherein each of the handles has a second end provided with a grip portion (31).

7. The gardening shears of claim 1, wherein each of the cutters is a blade.

8. The gardening shears of claim 1, wherein
one of the cutters is a blade; and
the other one of the cutters is an anvil.

## Patentansprüche

1. Gartenschere aufweisend:
zwei einander gegenüberliegende Schneiden (10),
zwei Griffe (30), die jeweils mit den Schneiden verbunden sind, und
zwei Schwenkeinheiten (20), die jeweils schwenkbar mit jeweils einer der Schneiden und jeweils einem der Griffe verbunden sind,
wobei jeder der Griffe relativ zu jeweils einer der Schneiden mittels jeweils einer der Schwenkeinheiten schwenkbar ist, um einen Winkel zwischen jedem der Griffe und
den entsprechenden Schneiden zu verändern,
**dadurch gekennzeichnet, dass** sie ferner aufweist: dass
die Schneiden schwenkbar miteinander verbunden sind,
jede der Schneiden einen hinteren Bereich hat, der mit einem ersten Schwenksitz (12) und einem zweiten Schwenksitz (13), der beabstandet vom ersten Schwenksitz ist, ausgestattet ist,
jeder des ersten Schwenksitzes und des zweiten Schwenksitzes jeder der Schneiden eine Innenseite hat, die mit einer Durchgangsöffnung (14) versehen ist,
der erste Schwenksitz jeder der Schneiden eine Innenwand aufweist, die mit einem Innengewinde (15) versehen ist, die mit der Durchgangsöffnung in Verbindung steht,
der erste Schwenksitz jeder der Schneiden eine Seite hat, die mit einem ersten gezahnten Bereich (16) versehen ist,
jeder der Griffe ein erstes Ende hat, das mit einem Gelenkkopf (32) versehen ist, der schwenkbar in einem Bereich zwischen dem ersten Schwenksitz und dem zweiten Schwenksitz der entsprechenden Schneide angebracht ist,
der Gelenkkopf jedes der Griffe eine Seite hat, die mit einem zweiten gezahnten Bereich (35) versehen ist, welcher beweglich ist, um in Eingriff mit dem ersten gezahnten Bereich des ersten Schwenksitzes der entsprechenden Schneide zu gelangen,
der Gelenkkopf jedes der Griffe ein Inneres hat, das mit einer Verriegelungsöffnung (34) ausgestattet ist, und zwei gegenüberliegende Flächen hat, die jeweils mit einer Montageöffnung (33) versehen sind, welche mit der Verriegelungsöffnung verbunden ist,
jede der Schwenkeinheiten umfasst:
einen Drehknopf (23), der drehbar am ersten Schwenksitz der entsprechenden Schneide angebracht ist,
ein Kontaktelement (24), das in der Durchgangsöffnung des zweiten Schwenksitzes der entsprechenden Schneide angebracht ist und am Gelenkkopf des entsprechenden Griffs anliegt,
eine Verbindungsstange (25), die der Reihe nach sich durch das Kontaktelement,
den Gelenkkopf des entsprechenden Griffs, den ersten Schwenksitz der entsprechenden Schneide und den Drehknopf erstreckt, und
ein Befestigungselement (22), das an der Verbindungsstange befestigt ist und am Drehknopf anliegt,
wobei der Drehknopf jeder der Schwenkeinheiten einen Umfang hat, der mit zwei einander gegenüberliegenden Betätigungsflügeln (237) ausgestattet ist,
der Drehknopf jeder Schwenkeinheit ein erstes Ende (231) hat, das mit einer Montagehülse (233) ausgestattet ist, welche eine Außenwand hat, die mit einem Außengewinde (234) ausgestattet ist, das in das Innengewinde des ersten Schwenksitzes der entsprechenden Schneide geschraubt ist,
der Drehknopf jeder Schwenkeinheit ein zweites Ende (232) hat, das mit einer Einsenkung (236) ausgestattet ist,
der Drehknopf jeder Schwenkeinheit hat ein Inneres hat, das mit einem Durchlass (235) ausgestattet ist, welcher mit der Einsenkung verbunden ist, um die Durchführung der Verbindungsstange zu ermöglichen,
das Kontaktelement jeder Schwenkeinheit ein Inneres hat, das mit einem Rohr (242) ausgestattet ist, welches an der Verbindungsstange angebracht ist,
das Rohr des Kontaktelements jeder Schwenkeinheit ein Inneres hat, das mit einer Öffnung (241) ausgestattet ist, um die Durchführung der Verbindungsstange zu ermöglichen,
das Rohr des Kontaktelements jeder Schwenkeinheit eine Endfläche hat, die mit einer gestuften Anlagekante (243) ausgebildet ist, welche mit der Öffnung verbunden ist,
die Verbindungsstange jeder der Schwenkeinheiten sich der Reihe nach durch die Öffnung des Rohres des Kontaktelements, die Verriegelungsöffnung des Gelenkkopfes des entsprechenden Griffs, die Durchgangsöffnung des ersten Schwenksitzes der entsprechenden Schneide und den Durchlass des Drehknopfes in die Einsenkung des Drehknopfes erstreckt,
die Verbindungsstange jeder der Schwenkeinheiten ein erstes Ende, das mit einem vergrößerten Stoppbereich (251) ausgebildet ist, welcher an der Anlagekante des Kontaktelements anliegt, und ein zweites Ende hat, das mit einem Gewindebereich (252) ausgestattet ist, welcher nach außen vom Durchlass des Drehknopfes vorsteht und sich in die Einsenkung des Drehknopfes erstreckt,
die Verbindungsstange jeder der Schwenkeinheiten einen Mittelbereich hat, der mit einem Verriegelungsbereich (253) ausgestattet ist, der in der Verriegelungsöffnung des Gelenkkopfes des entsprechenden Griffs verriegelt ist,
wobei der Verriegelungsbereich jeder Schwenkeinheit auf den Gewindebereich der Verbindungsstange geschraubt ist.

2. Gartenschere nach Anspruch 1, wobei
der hintere Bereich jede der Schneiden mit einer Montagebasis (11) verbunden ist, und
der erste Schwenksitz und der zweite Schwenksitz jeder der Schneiden an der Montagebasis angebracht sind.

3. Gartenschere nach Anspruch 1, wobei jede der Schwenkeinheiten ferner eine Dichtkappe (21) aufweist, die an dem Drehknopf angebracht ist und sich teilweise in die Einsenkung des Drehknopfes erstreckt, um die Einsenkung des Drehknopfes abzudichten und das Befestigungselement und den Gewindebereich der Verbindungsstange abzudecken.

4. Gartenschere nach Anspruch 1, wobei
der Drehknopf jeder Schwenkeinheit eine Oberfläche hat, die mit einer Richtungsmarkierung versehen ist, um die verriegelte und die entriegelte Richtung des Drehknopfes jeder der Schwenkeinheiten anzuzeigen, und
die Richtungsmarkierung an dem ersten Ende oder dem zweiten Ende des Drehknopfes ausgebildet ist.

5. Gartenschere nach Anspruch 1, wobei
die Verriegelungsöffnung (34) des Gelenkkopfes (32) jedes der Griffe eine nicht-kreisförmige Gestalt hat, und
der Verriegelungsbereich der Verbindungsstange (25) jeder der Schwenkeinheiten eine nicht-kreisförmige Gestalt hat.

6. Gartenschere nach Anspruch 1, wobei jeder der Griffe ein zweites Ende hat, das mit einem Griffabschnitt (31) versehen ist.

7. Gartenschere nach Anspruch 1, wobei jede der Schneiden eine Klinge ist.

8. Gartenschere nach Anspruch 1, wobei eine der Schneiden eine Klinge und
die andere der Schneiden ein Amboss ist.

## Revendications

1. Sécateur de jardinage, composé de :
deux lames opposées (10);
deux poignées (30) reliées aux lames respectivement; et
deux unités pivotantes (20) chacune reliée de façon pivotante avec l'une des lames respectives et l'une des poignées respectives;
où chaque poignée est pivotable par rapport à l'une des lames respectives par une des unités de pivot respectives pour changer un angle entre chacune des poignées et les lames respectives;
**caractérisé en ce qu'**il comprend en outre ce qui suit :
les lames sont reliées de façon pivotante l'une avec l'autre;
chacune des lames a une partie postérieure pourvue d'un premier logement de pivot (12) et un deuxième logement de pivot (13) espacé du premier logement de pivot;
chacun des premier logement de pivot et deuxième logement de pivot de chacune des lames a un intérieur pourvu d'un trou de passage (14);
le premier logement de pivot de chacune des lames a une paroi intérieure pourvu d'un filetage interne (15) relié au trou de passage;
le premier logement de pivot de chacune des lames a un côté pourvu d'une première partie dentée (16);
chaque poignée a une première extrémité pourvue d'une tête de pivot (32) montée de façon pivotante dans un espace entre le premier logement de pivot et le deuxième logement de pivot de la lame respective;
la tête de pivot de chaque poignée a un côté pourvu d'une deuxième partie dentée (35) qui est mobile pour engager la première partie dentée du premier logement de pivot de la lame respective;
la tête de pivot de chaque poignée a un intérieur pourvu d'un trou de blocage (34) et
a deux faces opposées, chacune pourvue d'un trou de montage (33) reliée au trou de blocage;
chaque unité de pivot comprend :
un bouton de rotation (23) monté de façon rotative sur le premier logement de pivot de la lame respective;
un élément de contact (24) monté dans le trou de passage du deuxième logement de pivot de la lame respective et contigu à la tête de pivot de la poignée respective;
une bielle (25) s'étendant à son tour à travers l'élément de contact, la tête de pivot de la poignée respective, le premier logement de pivot de la lame respective et le bouton de rotation; et
un élément de fixation (22) bloqué sur la bielle et contigu au bouton de rotation;
le bouton de rotation de chaque unité de pivot a une périphérie pourvue de deux ailes de commande opposées (237);
le bouton de rotation de chaque unité de pivot a une première extrémité (231) pourvue d'une douille de montage (233) qui a une paroi extérieure pourvue d'un filetage externe (234) vissé dans le filetage interne du premier logement de pivot de la lame respective;
le bouton de rotation de chaque unité de pivot a une deuxième extrémité (232) pourvue d'un lamage (236);
le bouton de rotation de chaque unité de pivot a un intérieur pourvu d'un passage (235) relié au lamage pour permettre le passage de la bielle;
l'élément de contact de chaque unité de pivot a un intérieur pourvu d'un tube (242) monté sur la bielle;
le tube de l'élément de contact de chaque unité de pivot a un intérieur pourvu d'une ouverture (241) pour permettre le passage de la bielle;
le tube de l'élément de contact de chaque unité de pivot a une face d'extrémité pourvue d'un bord cranté contigu (243) relié à l'ouverture;
la bielle de chaque unité de pivot s'étend à son tour à travers l'ouverture du tube de l'élément de contact, le trou de blocage de la tête de pivot de la poignée respective,
le trou de passage du premier logement de pivot de la lame respective et le passage du bouton de rotation dans le lamage du bouton de rotation;
la bielle de chaque unité de pivot a une première extrémité pourvue d'une partie d'arrêt élargie (251) contigüe au bord de l'élément de contact et une deuxième extrémité pourvue d'un morceau fileté (252) qui dépasse à l'extérieur du passage du bouton de rotation et s'étend dans le lamage du bouton de rotation;
la barre de connexion de chaque unité de pivot a une partie intermédiaire pourvue d'une partie de blocage (253) fermée dans le trou de blocage de la tête de pivot de la poignée respective;
l'élément de fixation de chaque unité de pivot est vissé sur le morceau fileté de la bielle.

2. Sécateur de jardinage de la revendication 1, où la partie postérieure de chaque lame est associée à une base de montage (11); et
le premier logement de pivot et le deuxième logement de pivot de chaque lame sont montés sur la base de montage.

3. Sécateur de jardinage de la revendication 1, où chaque unité de pivot comprend en outre un bouchon avec joint (21) monté sur le bouton de rotation et s'étendant partiellement dans le lamage du bouton de rotation pour étancher le lamage du bouton de rotation et couvrir l'élément de fixation et le morceau fileté de la bielle.

4. Sécateur de jardinage de la revendication 1, où le bouton de rotation de chaque unité de pivot a une surface pourvue d'une marque de direction pour indiquer les directions bloquées et débloquées du bouton de rotation de chaque unité de pivot; et la marque de direction est formée sur la première extrémité ou la deuxième extrémité du bouton de rotation.

5. Sécateur de jardinage de la revendication 1, où le trou de blocage (34) de la tête de pivot (32) de chaque poignée a une forme non-circulaire; et
la partie de blocage de la bielle (25) de chaque unité de pivot a une forme non-circulaire.

6. Sécateur de jardinage de la revendication 1, où chaque poignée a une deuxième extrémité pourvue d'une partie de préhension (31).

7. Sécateur de jardinage de la revendication 1, où chaque lame est un élément coupant.

8. Sécateur de jardinage de la revendication 1, où l'une des lames est un élément coupant; et l'autre est une contre-lame.
